# EUROPÄISCHE PATENTSCHRIFT

(11) **EP 0 985 027 B1**
(45) Veröffentlichungstag und Bekanntmachung des Hinweises auf die Patenterteilung: **31.10.2001**
(21) Anmeldenummer: 98929379.0
(22) Anmeldetag: 26.05.1998
(51) Int. Cl.: C12H 1/16, A23L 3/26, A23L 3/32, C12H 1/22

(54) **VORRICHTUNG UND VERFAHREN ZUM BEEINFLUSSEN DES AROMAS UND DES GESCHMACKS VON SPEISEN UND GETRÄNKEN**
METHOD AND DEVICE FOR INFLUENCING THE AROMA AND TASTE OF FOOD AND BEVERAGES
DISPOSITIF ET PROCEDE POUR INFLUER SUR L'AROME ET LE GOUT D'ALIMENTS ET DE BOISSONS

(30) Priorität: 26.05.1997 DE 19721920
(43) Veröffentlichungstag der Anmeldung: 15.03.2000
(73) Patentinhaber: Litterst, Werner-Alfons, 77654 Offenburg (DE)
(72) Erfinder: Litterst, Werner-Alfons, 77654 Offenburg (DE)
(74) Vertreter: Wolf, Eckhard, Dr.-Ing.
(86) Internationale Anmeldenummer: EP9803097
(87) Internationale Veröffentlichungsnummer: WO9854291

(56) Entgegenhaltungen:
- EP-A- 0 828 001
- WO-A-96/27302
- DE-A- 3 826 744
- US-A- 4 612 199
- DATABASE WPI Section Ch, Week 9721 Derwent Publications Ltd., London, GB; Class D13, AN 97-226970 XP002087811 & CN 1 098 137 A (ZHAO B), 1. Februar 1995

## Beschreibung

Die Erfindung betrifft eine Vorrichtung und ein Verfahren zum Beeinflussen des Aromas und des Geschmacks von Speisen oder Getränken, insbesondere von alkoholischen Destillaten, Weinen und Fruchtsäften. Viele Getränke, insbesondere alkoholische Getränke wie Destillate und Weine, aber auch Fruchtsäfte, weisen unmittelbar nach ihrer Herstellung oftmals einen als unangenehm scharf empfundenen, unausgewogenen Geschmack auf. Um diese Schärfe zu mildern, ist es bekannt, die Getränke durch Lagerung in Fässern oder Tanks einem Alterungsprozeß zu unterwerfen, in dessen Verlauf bestimmte für den Geschmack mitbestimmende Inhaltsstoffe, wie z.B. ätherische Öle und Essenzen, Säuren und dergleichen, verändert werden. Ein derartiger Alterungsprozeß wirkt sich meist vorteilhaft auf den Geschmack und das Aroma der Getränke aus. Andererseits gibt es chemische Prozesse, wie beispielsweise Oxidationsprozesse bei Weinen, die während der Alterung zu einer Geschmacks- und Aromaverschlechterung führen können. Als nachteilig wird bei dieser Vorgehensweise empfunden, daß der Alterungsprozeß oft mehrere Jahre in Anspruch nimmt, bis der gewünschte Effekt erzielt ist.

Ein Verfahren und eine Vorrichtung zur Weinbehandlung mit elektromagnetischen Wechselfeldern sind aus der DEOS 2 144 418 bekannt. Dort ist ein Frequenzerzeuger mit zwei Oszillatoren vorgesehen, die jeweils mit einer einen Behälter aus Glas oder Kunststoff schraubenlinienförmig umgebenden Antennen-Elektrode in. Verbindung stehen. Die Oszillatoren erzeugen elektromagnetische Wechselfelder mit einem festen Frequenzverhältnis von etwa 2:1, denen der zu behandelnde Wein ausgesetzt wird. Die Leistungsabgabe des Frequenzerzeugers liegt dabei im Bereich von etwa einem Watt. Als nachteilig wird hierbei vor allem empfunden, daß mit dem Frequenzerzeuger eine externe Energiequelle bereitgestellt werden muß und jeweils nur spezielle Frequenzen für die Behandlung zur Verfügung stehen. Weiterhin sind Behälter aus Glas bruchempfindlich, während es bei Behältern aus Kunststoff zu unerwünschten oder sogar gesundheitsschädlichen Reaktionen des Behältermaterials mit den zu behandelnden Speisen oder Getränken kommen kann.

Aus der DE-PS 38 148 ist eine weitere Vorrichtung zur Behandlung von Weinen und anderen alkoholischen Flüssigkeiten bekannt, deren Betrieb ebenfalls eine externe Stromquelle erfordert. In diesem Fall wird eine Spule mit einem von einer Zellenbatterie erzeugten elektrischen Gleichstrom beaufschlagt.

Aus der US 4,612,199 sind eine Vorrichtung und ein Verfahren bekannt, bei denen Lebensmittel mittels eines elektrischen Stroms behandelt werden. Dabei werden die Lebensmittel in einem Behälter angeordnet, der dann mit einer als Elektrolyt dienenden Salzlösung aufgefüllt wird. Im Inneren des Behälters ist ein Elektrodenpaar angeordnet und der Behälter wird zusätzlich von einer Ringspule zur Erzeugung eines Magnetfeldes umschlossen. Die Elektroden und die Ringspule werden mit einem elektrischen Wechselstrom beaufschlagt, so daß der resultierende Stromfluß durch das Elektrolyt und die Lebensmittel sowie das durch die Spule erzeugte, magnetische Wechselfeld eine gleichmäßige Erhitzung der Lebensmittel bewirken sollen.

Aus der WO 96/27302 sind ein weiteres Verfahren und eine entsprechende Vorrichtung zur Behandlung von Lebensmitteln bekannt. Hierbei werden Lebens- oder Genußmittel magnetischen oder elektrischen Feldern ausgesetzt, deren Frequenz automatisch oder manuell variabel ist. Zur Erzeugung dieser magnetischen oder elektrischen Felder sind eine separate Energiequelle und eine aufwendige elektronische Steuerung erforderlich.

Aus der DE 3826744 A1 sind ein Verfahren und eine Anordnung zur Behandlung von alkoholhaltigen und alkoholfreien Getränken bekannt, bei dem die Getränke dem Einfluß eines Magnetfeldes ausgesetzt werden. Hierzu können entweder Permanentmagnete verwendet werden, wobei dann eine Relativbewegung zwischen den Magneten und den Getränken erforderlich ist, oder es wird ein magnetisches Wechselfeld verwendet, zu dessen Erzeugung eine separate Energiequelle erforderlich ist.

Die Aufgabe der vorliegenden Erfindung besteht daher darin, ein Verfahren und eine Vorrichtung bereitzustellen, mit denen eine Geschmacks- und Aromaverbesserung von Speisen und Getränken innerhalb kürzester Zeit ohne den Einsatz zusätzlicher Energiequellen erreichbar ist.

Zur Lösung dieser Aufgabe werden die Merkmalskombinationen der Ansprüche 1 und 11 vorgeschlagen. Vorteilhafte Ausgestaltungen und Weiterbildungen der Erfindung ergeben sich aus den abhängigen Ansprüchen.

Die Erfindung geht vor allem von dem Gedanken aus, daß die für den Geschmack und das Aroma bestimmenden Inhaltsstoffe der Speisen und Getränke in ihrer Zusammensetzung und Wirkung durch elektromagnetische Felder beeinflußbar sind. Gemäß der Erfindung wird daher vorgeschlagen, einen innenseitig mit der Speise oder dem Getränk beaufschlagbaren Rohrabschnitt aus leitendem Material vorzusehen, der außenseitig von einem wendelförmig gewickelten Metalldraht mit offenen Enden umgeben ist. In den als Spule wirkenden Metalldraht koppelt breitbandig allerorts vorhandene elektromagnetische Strahlung ein und erzeugt dort Wechselströme mit entsprechenden Frequenzen. Das Frequenzspektrum reicht dabei von 50 Hz, hervorgerufen durch die Netzwechselspannung, bis zu einigen GHz, hervorgerufen durch die Telekommunikation und dergleichen. Hierdurch entsteht auch im Inneren der Spule ein breitbandiges, homogenes elektromagnetische Wechselfeld, welches auf das sich im Innenbereich der Spule befindliche Getränk einwirkt. Geeignete Frequenzen des Feldes können sich einerseits auf die Molekülstruktur bestimmter Inhaltsstoffe des Getränks direkt auswirken oder andererseits auch zu einer Polarisation der Wassermoleküle, die einen Hauptbestandteil der meisten Getränke bilden, führen und damit die Bildung von Wasserstoff- oder Hydratbrücken zwischen den Wassermolekülen und weiteren in den Getränken vorhandenen Molekülgruppen begünstigen. Hierdurch kann in vergleichsweise kurzer Zeit ein ähnlicher Effekt erzielt werden, wie er auch bei einem Alterungsprozeß des Getränks auftritt. Die beim Genuß unangenehm erscheinenden Säuren und Gerbstoffe bei Weinen und Fruchtsäften treten soweit in den Hintergrund, daß sie nicht mehr als unangenehm empfunden werden. Geschmackstests haben ergeben, daß die meisten Testpersonen den Geschmack und das Aroma von mit der erfindungsgemäßen Vorrichtung behandelten Getränken dem Geschmack und Aroma von unbehandelten Getränken vorziehen, bzw. als milder, ausgewogener und "runder" empfinden. Grundsätzlich wurde festgestellt, daß beim Anwenden dieses Verfahrens die Qualität der jeweiligen Getränke erheblich verbessert wurde. Neben Getränken hat sich auch bei festen Nahrungsmitteln herausgestellt, daß mit der Erfindungsgemäßen Vorrichtung eine Verbesserung der Aroma- und Geschmackseigenschaften erzielbar ist. So eignet sich die rohrförmige Vorrichtung insbesondere zur Behandlung von pulver- oder granulatförmigen Speisen wie beispielsweise Suppenpulvern. Andererseits kann bei ausreichender Dimensionierung der Vorrichtung ein Transportorgan, beispielsweise ein Förderband durch diese hindurchgeführt werden, auf welches die Speisen aufgestellt werden. Weiterhin eignet sich die erfindungsgemäße Vorrichtung auch zur Behandlung von Wasser, wobei festgestellt wurde, daß hierdurch Ablagerungen in Leitungssystemen verhindert bzw. beseitigt werden. Die Oberflächenspannung des Wassers wird durch die Behandlung reduziert und der Geschmack verbessert.

Als besonders vorteilhaft hat sich erwiesen, wenn der Rohrabschnitt aus Edelstahl, insbesondere austenitischem Edelstahl besteht.

Gemäß einer bevorzugten Ausführungsform der Erfindung ist der Rohrabschnitt als innerer Rohrabschnitt eines doppelwandigen, einen zweiten äußeren Rohrabschnitt aufweisenden Gehäuses ausgebildet, wobei der Innendurchmesser des äußeren Rohrabschnitts größer ist als der Außendurchmesser des inneren Rohrabschnitts, so daß zwischen den Rohrabschnitten ein Hohlraum ausgebildet ist, in dem der konzentrisch zur Längsmittelachse der Rohrabschnitte gewickelte Metalldraht angeordnet ist. Das Gehäuse kann dabei im wesentlichen aus zwei zueinander konzentrisch angeordneten, zylindrischen Rohrabschnitten bestehen, die an ihrem einen Ende jeweils mit einem Boden versehen sind und an ihrem anderen Ende den Zwischenraum überbrückend und flüssigkeitsdicht verschließend miteinander verbunden sind, wobei der innere Rohrabschnitt kürzer ist als der äußere Rohrabschnitt, so daß die Böden der Rohrabschnitte im Abstand voneinander angeordnet sind und der Hohlraum zwischen den Rohrabschnitten topfförmig ist. Eine gesteigerte Wirkung bei der Geschmacks- und Aromaverbesserung wird erzielt, wenn in dem Zwischenraum zwischen den Böden der Rohrabschnitte ein weiterer wendelförmig gewickelter Metalldraht mit seiner Wendelachse quer zur Längsmittelachse der Rohrabschnitte liegend angeordnet ist. Bei dieser Ausführungsform ist die Vorrichtung also nach der Art eines doppelwandigen Topfes ausgebildet, der an seinem einen, bei seiner Verwendung nach oben gerichteten Ende eine Öffnung für das Einfüllen und Entnehmen des zu behandelnden Getränks aufweist.

Bei einer etwas einfacher ausgeführten Variante kann das Gehäuse zwei gleich lange, unterschiedliche Durchmesser aufweisende und konzentrisch zueinander angeordnete Rohrabschnitte aufweisen, die an ihrem einen Ende einen gemeinsamen Boden aufweisen und die an ihrem anderen Ende den Zwischenraum überbrückend und flüssigkeitsdicht abschließend miteinander verbunden sind, so daß zwischen den Rohrabschnitten ein zylindermantelförmiger Hohlraum gebildet ist, in dem der konzentrisch zur Längsmittelachse der Rohrabschnitte gewickelte Metalldraht angeordnet ist.

Um das Befüllen der Vorrichtung mit dem Getränk und die Entnahme des Getränks zu vereinfachen und gleichzeitig sicherzustellen, daß das zu behandelnde Getränk möglichst den gesamten Innenbereich des wendelförmig gewickelten Metalldrahts durchströmt, kann an der Innenwand des inneren Rohrabschnitts ein im Abstand vom Boden des Gehäuses mündendes und über das offene Ende des Gehäuses überstehendes Einlaufrohr angeordnet sein, und ein mit einem schräg nach außen und unten weisende Auslaufrohr versehener kegelstumpfförmiger Kragen kann an das obere Ende des inneren oder äußeren Rohrabschnitts anschließen. Eine derartige Ausführungsform ist vor allem für den Anschluß an eine Brennblase einer Destille geeignet, wobei das Destillat über einen Schlauch oder ein Rohr durch das Einlaufrohr geleitet wird und von unten her durch den Wirkbereich der Spule nach oben strömt und dort die Vorrichtung durch das Auslaufrohr verläßt.

Gemäß einer weiteren bevorzugten Variante der Erfindung ist der innere Rohrabschnitt länger als der äußere Rohrabschnitt und an beiden seiner Enden offen ausgebildet, und der äußere Rohrabschnitt ist konzentrisch zu dem inneren Rohrabschnitt angeordnet und an beiden seiner Enden den Zwischenraum zwischen den Rohrabschnitten überbrückend und flüssigkeitsdicht verschließend mit dem inneren Rohrabschnitt verbunden, so daß ein zylindermantelförmiger Hohlraum zwischen den Rohrabschnitten ausgebildet ist, in dem der konzentrisch zur Längsmittelachse der Rohrabschnitte gewickelte Metalldraht angeordnet ist. Diese Ausführungsform ist vor allem für große Durchflußmengen geeignet, etwa für die Behandlung von Weinen, Fruchtsäften oder Mineralwässern. Zweckmäßig ist dann hierbei auf die freien Endendes inneren Rohrabschnitts jeweils ein Schlauch aufsteckbar, so daß die Vorrichtung mit ihrem einen Ende direkt an die Produktionsstätte des Getränks angeschlossen werden kann und das Getränk nach seiner Behandlung über einen Schlauch oder dergleichen einer weiteren Verarbeitung zugeführt werden kann.

Um ein möglichst starkes Feld im Inneren der Spule erzeugen zu können, sollte diese aus einem gut leitenden Material bestehen, insbesondere aus Kupfer-, Silber- oder Gold-Legierungen. Der Metalldraht weist vorteilhaft eine Drahtstärke von 0,1 bis 10 mn auf. Er kann auch als Flachdraht mit im wesentlichen rechteckigem Querschnitt ausgebildet sein, wobei der Querschnitt 0,1 mm × 1 mm bis 10 mm × 100 mm betragen sollte. Eine Steigerung der Wirkung durch ein stärkeres Wechselfeld wird erzielt, wenn eine Mehrzahl, insbesondere zwei oder drei konzentrisch zueinander angeordnete Drahtwindungen vorgesehen sind. Zusätzlich kann das Gehäuse in vorteilhafter Weise mit einem Gesteinsmehl, vorzugsweise Quarzmehl gefüllt sein, welches den Raum zwischen der Spule und den Gehäuseinnenwänden ausfüllt.

Da die Spule selbst nicht in Kontakt mit dem zu behandelnden Getränk tritt, kann sie allerdings auch aus unedlen und reaktiven Metallen bestehen. Die Drahtwindungen sollten dabei aber in jedem Fall gegeneinander isoliert sein. Weiterhin ist es von Vorteil, wenn die Länge des von dem Getränk durchströmbaren Rohrabschnitts - und damit auch der Spule - größer ist als sein Durchmesser, vorzugsweise daß Zwei- bis Zehnfache des Durchmessers beträgt.

Gemäß einer alternativen Ausführungsform der Erfindung ist ein außenseitig mit der Speise oder dem Getränk beaufschlagbares, im wesentlichen plattenförmiges Gehäuse aus leitendem Material vorgesehen, in dessen Inneren ein gegebenenfalls um einen Trägerkörper gewickelter Metalldraht mit offenen Enden angeordnet ist. Die Speisen oder sich in geeigneten Behältnissen befindlichen Getränke werden für eine vorbestimmte Verweildauer auf das Gehäuse aufgestellt und dort behandelt. Eine weitere Steigerung der Wirkung wird erzielt, wenn zwei derartige Vorrichtungen mit ihren Breitseitenflächen planparallel zueinander in Abstand voneinander angeordnet werden, so daß die zu behandelnden Speisen oder Getränke zwischen diese gestellt oder zwischen diesen hindurchgeführt werden. Dabei können die Vorrichtungen mit ihren Breitseitenflächen sowohl horizontal als auch vertikal ausgerichtet sein.

Das erfindungsgemäße Verfahren zum Beeinflussen des Aromas von Getränken, insbesondere von Destillaten und Weinen, sieht vor, daß die Speise oder das Getränk durch einen zumindest teilweise von einem wendelförmig gewickelten, offene Enden aufweisenden Metalldraht umgebenen Rohrabschnitt aus leitendem Material geleitet wird. Hierbei ist eine gewisse Mindestaufenthaltsdauer des Getränks in dem Wirkbereich des eine Spule bildenden Metalldrahts notwendig. Gemäß einer bevorzugten Durchführung des Verfahrens beträgt die Aufenthaltsdauer des Getränks in dem vom gewendelten Metalldraht umschlossenen Bereich mindestens 100 Millisekunden, vorzugsweise zwischen 2 Sekunden und 30 Sekunden.

Alternativ wird eine Breitseitenfläche eines im wesentlichen plattenförmigen Gehäuses aus leitendem Material, in dessen Inneren ein gegebenenfalls um einen Trägerkörper gewickelter Metalldraht mit offenen Enden angeordnet ist, außenseitig mit der Speise oder dem Getränk beaufschlagt. Dabei kann die Speise oder das Getränk auf einem Transportorgan, insbesondere einem Förderband über die Breitseitenfläche des Gehäuses geleitet werden.

Im folgenden wird die Erfindung anhand von in der Zeichnung schematisch dargestellten Ausführungsbeispielen näher erläutert. Es zeigt:
- Fig. 1: einen Längsschnitt durch ein erstes Ausführungsbeispiel der Erfindung, welches sich insbesondere für den Anschluß an eine Brennblase einer Destille eignet;
- Fig. 2: einen Längsschnitt durch ein weiteres Ausführungsbeispiel der Erfindung, welches sich insbesondere für die Behandlung größerer Getränkemengen eignet; und
- Fig. 3: eine alternative, plattenförmige Ausführungsform der Vorrichtung, die sich insbesondere zur Behandlung von Speisen eignet.

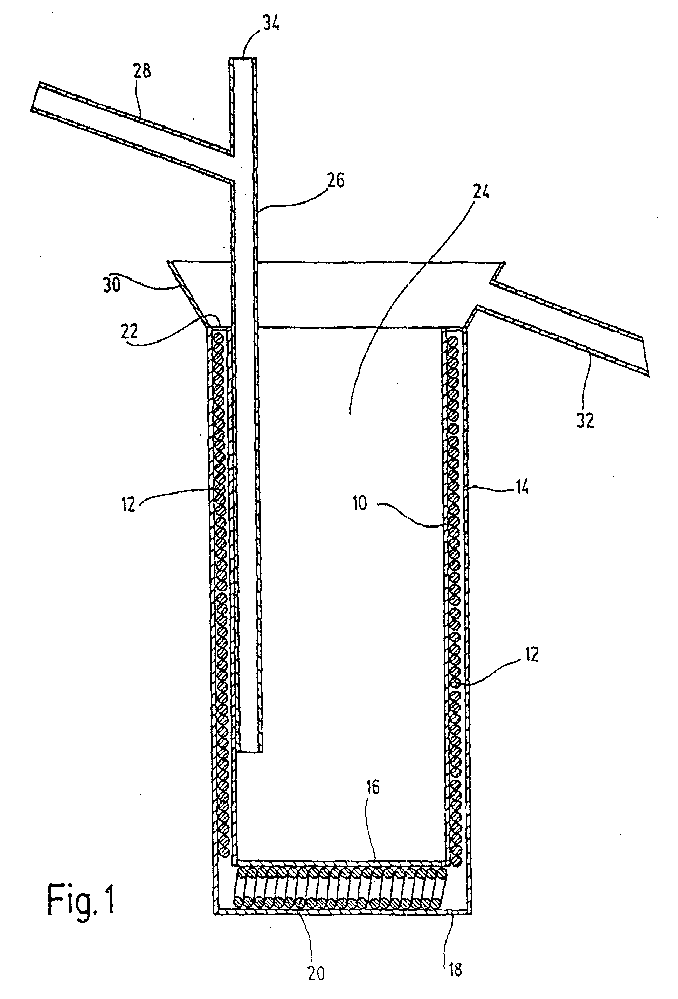

Die in Fig. 1 dargestellte Vorrichtung zum Beeinflussendes Geschmacks und des Aromas von Getränken besteht im wesentlichen aus einem ersten Rohrabschnitt 10, der über einen Großteil seiner Länge von einem wendelförmig gewickelten Metalldraht 12 umgeben ist. Der erste, innere Rohrabschnitt 10 und der Metalldraht 12 sind von einem konzentrisch zu diesen angeordneten zweiten, äußeren Rohrabschnitt 14 umschlossen. Sowohl der innere Rohrabschnitt 10 als auch der äußere Rohrabschnitt 14 ist an seinem einen Ende mit einem Boden 16 bzw. 18 versehen. Der innere Rohrabschnitt 10 ist kürzer ausgebildet als der äußere Rohrabschnitt 14, so daß die Böden 16, 18 im Abstand voneinander angeordnet sind. Indem Zwischenraum zwischen den Böden 16, 18 ist ein weiterer wendelförmig gewickelter Metalldraht 20 mit seiner Wendelachse quer zur Längsmittelachse der Rohrabschnitte 10, 14 liegend angeordnet. An ihrem anderen, der Bodenseite abgewandten Ende sind die Rohrabschnitte 10, 14 durch ein den Zwischenraum zwischen den Rohrabschnitten überbrückendes und flüssigkeitsdicht abschließendes kreisringförmiges Teil 22 miteinander verbunden. Auf diese Weise bilden die Rohrabschnitte 10, 14 mit den Böden 16, 18 und dem kreisringförmigen Teil 22 ein doppelwandiges Gehäuse, in dessen eingeschlossenen Zwischenraum die wendelförmig gewickelten Metalldrähte 12, 20 in der dargestellten Weise angeordnet sind. Der von dem inneren Rohrabschnitt 10 umschlossene Bereich 24 wird mit dem zu behandelnden Getränk beaufschlagt. In dem in Fig. 1 dargestellten Ausführungsbeispiel ist an der Innenwand des inneren Rohrabschnitts 10 ein im Abstand vom Boden 16 mündendes und über das offene Ende des Innenrohrs 10 überstehendes Einlaufrohr 26 angeordnet, durch das das Getränk über ein an den oberen Bereich des Einlaufrohrs 26 anschließendes Zulaufrohrstück 28 einströmt. Mit zunehmender Einlaufdauer des Getränks in die Vorrichtung steigt der Flüssigkeitspegel im Innenbereich des Rohrabschnitts 10 an, wobei jede Volumeneinheit des Getränks den Wirkbereich der Spule 12 von unten nach oben durchquert, bis das Getränk in den Bereich eines an das obere Ende des Rohrabschnitts 14 anschließenden kegelstumpfförmigen Kragen 30 gelangt, der mit einem schräg nach außen und unten weisenden Auslaufrohr 32 versehen ist, durch welchen das behandelte Getränk ausströmt und der weiteren Verarbeitung zugeführt wird. Das Einlaufrohr 26 ist zum Druckausgleich beim Einströmen des Getränks an seinem oberen Ende 34 offen ausgebildet, kann bei geringen Durchflußmengen aber auch geschlossen ausgebildet sein.

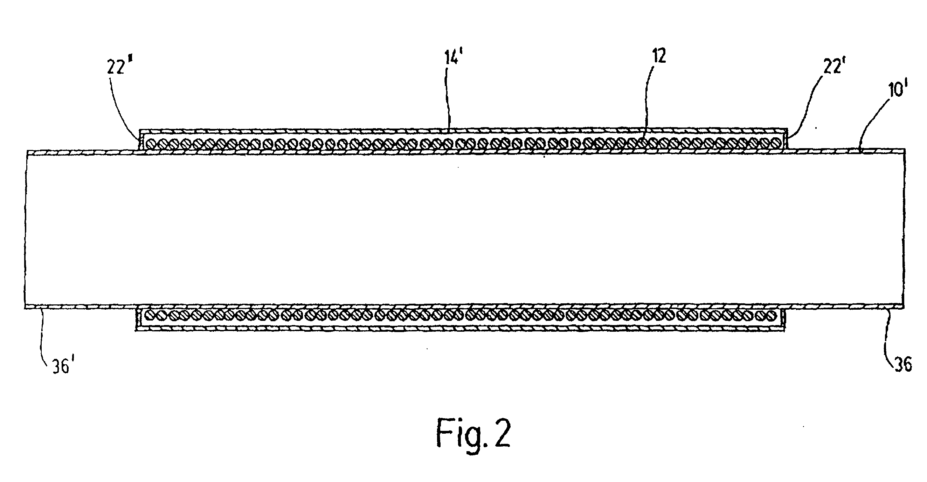

Die in Fig. 2 dargestellte Vorrichtung besteht im wesentlichen aus einem inneren Rohrabschnitt 10' und einem diesen unter Freilassung eines Zwischenraums konzentrisch umschließenden äußeren Rohrabschnitt 14', wobei der innere Rohrabschnitt 10' länger ausgebildet ist als der äußere Rohrabschnitt 14' und beidseitig in Richtung der Längsmittelachse der Rohrabschnitte über den Rohrabschnitt 14' übersteht. Auf die überstehenden Rohrenden 36, 36' des inneren Rohrabschnitts 10' kann jeweils ein Schlauch oder dergleichen aufgeschoben werden, so daß sich diese Vorrichtung beispielsweise in eine Abfüllanlage für Getränke integrieren läßt. Der äußere Rohrabschnitt 14' ist mittels zweier ringförmiger Teile 22', 22'' an beiden seiner Enden mit dem inneren Rohrabschnitt 10 den Zwischenraum überbrückend und flüssigkeitsdicht abschließend verbunden. Die Spule 12 ist mit ihrer Längsmittelachse konzentrisch zu den Längsmittelachsen der Rohrabschnitte 10', 14' in dem Zwischenraum zwischen den Rohrabschnitten angeordnet.

Die Durchströmgeschwindigkeit des Getränks durch die Vorrichtungen gemäß Fig. 1 und 2 wird jeweils so eingestellt, daß jede Volumeneinheit des Getränks den Wirkbereich der Spule, d.h. das in der Spule herrschende Feld, in einer Zeit zwischen 100 Millisekunden und 5 Minuten durchquert.

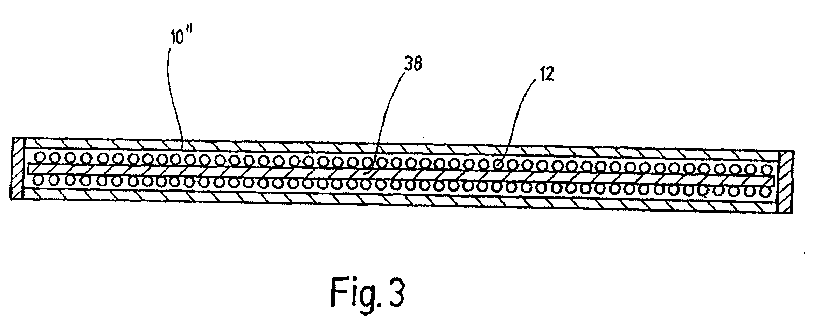

Fig. 3 zeigt eine alternative Ausgestaltung der Erfindung, bei der die Vorrichtung im wesentlichen plattenförmig ausgebildet ist. Der Metalldraht 12 ist hier auf eine dünne Trägerplatte 38 aufgewickelt und zusammen mit dieser in einem flachen Gehäuse 10'' aus Edelstahl angeordnet. Allerdings kann die Trägerplatte 38 auch aus der Drahtwindung entfernt werden, bevor diese in das Gehäuse 10'' eingebracht wird. Diese Ausführungsform eignet sich insbesondere zur Behandlung von festen Nahrungsmitteln, die für eine vorbestimmte Dauer auf die Vorrichtung aufgestellt werden und dort den sich außerhalb des Gehäuses schließenden Feldlinien des Wechselfeldes ausgesetzt sind. Es lassen sich aber auch Getränke, die bereits in Flaschen oder andere Behältnisse abgefüllt sind, mit dieser Ausführungsform der Erfindung behandeln. Eine weitere Steigerung der Wirkung wird erzielt, wenn zwei derartige Vorrichtungen mit ihren Breitseitenflächen planparallel zueinander in Abstand voneinander angeordnet werden, so daß die zu behandelnden Speisen oder Getränke zwischen diese gestellt oder zwischen diesen hindurchgeführt werden.

Zusammenfassend ist folgendes festzustellen: Die Erfindung betrifft eine Vorrichtung sowie ein Verfahren zum Beeinflussen des Aromas und des Geschmacks von Getränken, insbesondere von Destillaten und Weinen, wobei gemäß der Erfindung ein innenseitig mit dem Getränk beaufschlagbarer Rohrabschnitt 10, 10' aus leitendem Material vorgesehen ist, der außenseitig von einem wendelförmig gewickelten Metalldraht 12 mit offenen Enden umgeben ist.

## Patentansprüche

1. Vorrichtung zum Beeinflussen des Geschmacks und des Aromas von Speisen oder Getränken, insbesondere von alkoholischen Destillaten, Weinen und Fruchtsäften, **gekennzeichnet durch** einen innenseitig mit der Speise oder dem Getränk beaufschlagbaren Rohrabschnitt (10, 10') aus leitendem Material, der außenseitig von einem wendelförmig gewickelten Metalldraht (12) mit offenen Enden umgeben ist.

2. Vorrichtung nach Anspruch 1, **dadurch gekennzeichnet, daß** der Rohrabschnitt aus Edelstahl, insbesondere austenitischem Edelstahl besteht.

3. Vorrichtung nach Anspruch 1 oder 2, **dadurch gekennzeichnet, daß** der Rohrabschnitt als innerer Rohrabschnitt (10, 10') eines doppelwandigen, einen zweiten, äußeren Rohrabschnitt (14, 14') aufweisenden Gehäuses ausgebildet ist, wobei der Innendurchmesser des äußeren Rohrabschnitts (14, 14') größer ist als der Außendurchmesser des inneren Rohrabschnitts (10, 10'), so daß zwischen den Rohrabschnitten ein Hohlraum ausgebildet ist, in dem der konzentrisch zur Längsmittelachse der Rohrabschnitte gewickelte Metalldraht (12) angeordnet ist.

4. Vorrichtung nach Anspruch 3, **dadurch gekennzeichnet, daß** das Gehäuse im wesentlichen aus zwei zueinander konzentrisch angeordneten, zylindrischen Rohrabschnitten (10, 14) besteht, die an ihrem einen Ende jeweils mit einem Boden (16, 18) versehen sind und an ihrem anderen Ende den Zwischenraum überbrückend und flüssigkeitsdicht verschließend miteinander verbunden sind, wobei der innere Rohrabschnitt (10) kürzer ist als der äußere Rohrabschnitt (14), so daß die Böden (16, 18) der Rohrabschnitte im Abstand voneinander angeordnet sind und der Hohlraum zwischen den Rohrabschnitten topfförmig ist.

5. Vorrichtung nach Anspruch 4, **dadurch gekennzeichnet, daß** in dem Zwischenraum zwischen den Böden (16, 18) der Rohrabschnitte ein weiterer wendelförmig gewickelter Metalldraht (20) mit seiner Wendelachse quer zur Längsmittelachse der Rohrabschnitte (10, 14) liegend angeordnet ist.

6. Vorrichtung nach Anspruch 3, **dadurch gekennzeichnet, daß** das Gehäuse zwei gleich lange, unterschiedliche Durchmesser aufweisende und konzentrisch zueinander angeordnete Rohrabschnitte aufweist, die an ihrem einen Ende einen gemeinsamen Boden aufweisen und die an ihrem anderen Ende den Zwischenraum überbrückend und flüssigkeitsdicht abschließend miteinander verbunden sind, so daß zwischen den Rohrabschnitten ein zylindermantelförmiger Hohlraum gebildet ist, in dem der konzentrisch zur Längsmittelachse der Rohrabschnitte gewickelte Metalldraht (12) angeordnet ist.

7. Vorrichtung nach einem der Ansprüche 3 bis 5, **dadurch gekennzeichnet, daß** an der Innenwand des inneren Rohrabschnitts (10) ein im Abstand vom Boden (16) des Gehäuses mündendes und über das offene Ende des Gehäuses überstehendes Einlaufrohr (26) angeordnet ist, und daß ein mit einem schräg nach außen und unten weisenden Auslaufrohr (32) versehener kegelstumpfförmiger Kragen (30) an das obere Ende des inneren oder äußeren Rohrabschnitts (10, 14) anschließt.

8. Vorrichtung nach Anspruch 3, **dadurch gekennzeichnet, daß** der innere Rohrabschnitt (10') länger als der äußere Rohrabschnitt (14') und an beiden seiner Enden offen ausgebildet ist, und daß der äußere Rohrabschnitt (14') konzentrisch zu dem inneren Rohrabschnitt (10') angeordnet ist und an beiden seiner Enden den Zwischenraum zwischen den Rohrabschnitten (10', 14') überbrückend und flüssigkeitsdicht verschließend mit dem inneren Rohrabschnitt (10') verbunden ist, so daß ein zylindermantelförmiger Hohlraum zwischen den Rohrabschnitten (10', 14') ausgebildet ist, in dem der konzentrisch zu Längsmittelachse der Rohrabschnitte (10', 14') gewickelte Metalldraht (12) angeordnet ist.

9. Vorrichtung nach Anspruch 8, **dadurch gekennzeichnet, daß** auf die freien Enden (36, 36') des inneren Rohrabschnitts (10') jeweils ein Schlauch aufsteckbar ist.

10. Vorrichtung nach einem der Ansprüche 1 bis 9, **dadurch gekennzeichnet, daß** die Länge des von dem Getränk durchströmbaren Rohrabschnitts (10, 10') größer ist als sein Durchmesser, vorzugsweise das Zwei- bis Zehnfache des Durchmessers beträgt.

11. Vorrichtung zum Beeinflussen des Geschmacks und des Aromas von Speisen und Getränken, insbesondere von alkoholischen Destillaten, Weinen und Fruchtsäften, **gekennzeichnet durch** ein außenseitig mit der Speise oder dem Getränk beaufschlagbares, im wesentlichen plattenförmiges Gehäuse (10") aus leitendem Material, in dessen Inneren ein gegebenenfalls um einen Trägerkörper (38) gewickelter Metalldraht (12) mit offenen Enden angeordnet ist.

12. Vorrichtung nach Anspruch 11, **dadurch gekennzeichnet, daß** das Gehäuse (10'') aus Edelstahl, insbesondere austenitischem Edelstahl besteht.

13. Vorrichtung nach Anspruch 11 oder 12, **gekennzeichnet durch** zwei im Abstand voneinander mit im wesentlichen zueinander planparallel ausgerichteten Breitseitenflächen angeordnete, jeweils eine Drahtwicklung (12) enthaltende Gehäuse (10'').

14. Vorrichtung nach einem der Ansprüche 1 bis 13, **dadurch gekennzeichnet, daß** der Metalldraht (12, 20) aus Kupfer, Silber, Gold oder einer Legierung aus diesen Metallen besteht.

15. Vorrichtung nach einem der Ansprüche 1 bis 14, **dadurch gekennzeichnet, daß** der Metalldraht (12, 20) eine Drahtstärke von 0,1 bis 10 mm aufweist.

16. Vorrichtung nach einem der Ansprüche 1 bis 15, **dadurch gekennzeichnet, daß** der Metalldraht (12, 20) als Flachdraht mit im wesentlichen rechteckigem Querschnitt ausgebildet ist, wobei der Querschnitt 0,1 mm × 1 mm bis 10 mm × 100 mm beträgt.

17. Vorrichtung nach einem der Ansprüche 1 bis 16, **gekennzeichnet durch** eine Mehrzahl, insbesondere zwei oder drei konzentrisch zueinander angeordnete Drahtwindungen.

18. Vorrichtung nach einem der Ansprüche 1 bis 17, **dadurch gekennzeichnet, daß** die Drahtwindungen (12, 20') gegeneinander isoliert sind.

19. Vorrichtung nach einem der Ansprüche 3 bis 18, **dadurch gekennzeichnet, daß** das Gehäuse mit einem Gesteinsmehl, vorzugsweise Quarzmehl gefüllt ist.

20. Verfahren zum Beeinflussen des Geschmacks und des Aromas von Speisen und Getränken, insbesondere von Destillaten und Weinen, unter Verwendung einer Vorrichtung nach einem der Ansprüche 1 bis 10, **dadurch gekennzeichnet, daß** die Speise oder das Getränk durch einen zumindest teilweise von einem wendelförmig gewickelten, offene Enden aufweisenden Metalldraht (12) umgebenen Rohrabschnitt (10, 10') aus leitendem Material geleitet wird.

21. Verfahren zum Beeinflussen des Geschmacks und des Aromas von Speisen und Getränken, insbesondere von Destillaten und Weinen, unter Verwendung einer Vorrichtung nach einem der Ansprüche 11 bis 19, **dadurch gekennzeichnet, daß** eine Breitseitenfläche eines im wesentlichen plattenförmigen Gehäuses (10") aus leitendem Material, in dessen Inneren ein gegebenenfalls um einen Trägerkörper (38) gewickelter Metalldraht (12) mit offenen Enden angeordnet ist, außenseitig mit der Speise oder dem Getränk beaufschlagt wird.

22. Verfahren nach Anspruch 21, **dadurch gekennzeichnet, daß** die Speise oder das Getränk auf einem Transportorgan, insbesondere einem Förderband über die Breitseitenfläche des Gehäuses geleitet wird.

23. Verfahren nach einem der Ansprüche 20 bis 22, **dadurch gekennzeichnet, daß** die Aufenthaltsdauer der Speise oder des Getränks in dem vom gewickelten Metalldraht (12) umschlossenen Bereich mindestens 100 Millisekunden, vorzugsweise zwischen 2 Sekunden und 30 Sekunden beträgt.

## Claims

1. A device for influencing the flavour and the aroma of foodstuff or beverages, especially of alcoholic spirits, wines and fruit juices, **characterized by** a section of pipe (10, 10') made of conducting material, the inside of which is adapted to be subjected to the foodstuff or beverage and the outside of which is enclosed by a helically wound metal wire (12) having unterminated ends.

2. The device of claim 1, **characterized in that** the section of pipe is made of stainless steel, in particular of austenitic stainless steel.

3. The device of claim 1 or 2, **characterized in that** the section of pipe is formed to be an inner section of pipe (10, 10') of a twin-wall casing comprising a second, outer section of pipe (14, 14'), wherein the inner diameter of the outer section of pipe (14, 14') is larger than the outer diameter of the inner section of pipe (10, 10'), so that a hollow space is formed between the two sections of pipe, in which the metal wire (12), which is wound concentrically with respect to the longitudinal axis of the sections of pipe, is disposed.

4. The device of claim 3, **characterized in that** the casing is essentially formed by two concentrically disposed cylindrical sections of pipe (10, 14), which are provided at one end thereof with a floor portion (16, 18) and at the other end thereof are bridged over the interspacing gap in a fluid-tight manner, wherein the inner section of pipe (10) is shorter than the outer setion of pipe (14), so that the floor portions (16, 18) of the sections of pipe are spaced with respect to each other and the hollow space between the sections of pipe is pot-shaped.

5. The device of claim 4, **characterized in that** a further helically wound metal wire (20) is disposed in the space between the floor portions (16, 18) of the sections of pipe, the helical axis of the wire being disposed perpendicularly with respect to the longitudinal axis of the sections of pipe (10, 14).

6. The device of claim 3, **characterized in that** the casing comprises two sections of pipe of equal length and having different diameters which are disposed concentrically with respect to each other and have at one end thereof a mutual floor portion, and at the other end thereof are bridged over the interspacing gap in a fluid-tight manner, so that a cylindrical hollow space is formed between the sections of pipe, in which the metal wire (12), which is wound concentrically with respect to the longitudinal axis of the sections of pipe, is disposed.

7. The device of one of claims 3 to 5, **characterized in that** an inflow pipe (26) is disposed at the inner wall of the inner section of pipe (10) which has an opening spaced at a distance from the floor portion (16) of the casing and which protrudes over the open end of the casing, and that a conical collar (30) having a downwardly oriented outflow pipe (32) attached thereto is disposed at the upper end of the inner or outer section of pipe (10, 14).

8. The device of claim 3, **characterized in that** the inner section of pipe (10') is longer than the outer section of pipe (14') and is open at both ends thereof, and that the outer section of pipe (14') is disposed concentrically with respect to the inner section of pipe (10') and is at both ends thereof connected to the inner section of pipe (10') over the interspacing gap between the sections of pipe (10', 14') in a fluid-tight manner, so that a cylindrical hollow space is formed between the sections of pipe (10', 14'), in which the metal wire (12), which is wound concentrically with respect to the longitudinal axis of the sections of pipe (10', 14'), is disposed.

9. The device of claim 8, **characterized in that** the free end portions (36, 36') of the inner section of pipe (10') are adapted to accept on them a lenght of hose.

10. The device of one of claims 1 to 9, **characterized in that** the length of the section of pipe (10, 10') through which the beverage is intended to flow is larger than its diameter, and is preferably two to ten times larger than the diameter.

11. A device for influencing the flavour and the aroma of foodstuff and beverages, especially of alcoholic spirits, wines and fruit juices, **characterized by** an essentially plate-shaped casing (10") made of conducting material, which is adapted to have placed the foodstuff or beverage onto the outer side thereof, a metal wire (12) having unterminated ends, which may be wound onto a support body (38), being disposed inside the casing.

12. The device of claim 11, **characterized in that** the casing (10") is made of stainless steel, in particular of austenitic stainless steel.

13. The device of claim 11 or 12, **characterized by** two casings (10") which are spaced with respect to each other with their broad sides arranged parallel to each other, each of the casings (10") containing a wound wire (12).

14. The device of one of claims 1 to 13, **characterized in that** the metal wire (12, 20) is made of copper, silver or gold, or an alloy of these metals.

15. The device of one of claims 1 to 14, **characterized in that** the metal wire (12, 20) has a diameter of 0.1 to 10 mm.

16. The device of one of claims 1 to 15, **characterized in that** the metal wire (12, 20) is formed to be a flattened wire having an essentially rectangular cross section in the range of 0.1 mm x 1 mm to 10 mm x 100 mm.

17. The device of one of claims 1 to 16, **characterized by** a plurality, in particular two or three, wire windings arranged concentrically with respect to each other.

18. The device of one of claims 1 to 17, **characterized in that** the wire windings (12, 20') are insulated from one another.

19. The device of one of claims 3 to 18, **characterized in that** the casing is filled with a powdered mineral material, in particular powdered quartz material.

20. A method for influencing the flavour and aroma of foodstuff and beverages, in particular of distilled spirits and wines, making use of the device of one of claims 1 to 10, **characterized in that** the foodstuff or beverage is flowed through a section of pipe (10, 10') which is at least in part surrounded by a helically wound metal wire (12) having unterminated ends and being made of a conductive material.

21. A method for influencing the flavour and aroma of foodstuff and beverages, in particular of distilled spirits and wines, making use of the device of one of claims 11 to 19, **characterized in that** a broad side of an essentially plate-shaped casing (10") made of a conducting material, inside of which there is disposed a metal wire (12) having unterminated ends and which may be wound onto a support body (38), is subjected on its outside to the foodstuff or beverage.

22. The method of claim 21, **characterized in that** the foodstuff or beverage is moved over the broad side of the casing by means of a transport device, in particular by means of a conveyor belt.

23. The method of one of claims 20 to 22, **characterized in that** the time the foodstuff or beverage spends in the region surrounded be the metal wire (12) is at least 100 milliseconds, preferably in the range of 2 seconds to 30 seconds.

## Revendications

1. Dispositif pour influer sur le goût et l'arôme d'aliments ou de boissons, en particulier de produits de distillation alcoolisés, de vins et de jus de fruits, **caractérisé par** une section de tuyau en matériau conducteur (10, 10'), qui côté intérieur peut être alimentée en aliment ou en boisson et qui côté extérieur est entourée d'un fil métallique (12) enroulé en spirale et comportant des extrémités ouvertes.

2. Dispositif selon la revendication 1, **caractérisé en ce que** la section de tuyau est fabriquée dans un acier spécial, en particulier dans un acier spécial austénitique.

3. Dispositif selon la revendication 1 ou 2, **caractérisé en ce que** la section de tuyau est conçue comme section de tuyau intérieure (10, 10') d'un boîtier à double paroi présentant une seconde section de tuyau extérieure (14, 14'), le diamètre intérieur de la section de tuyau extérieure (14, 14') étant supérieur au diamètre extérieur de la section de tuyau intérieure (10, 10'), de telle sorte qu'il est formé un espace vide entre les sections de tuyau, dans lequel est disposé le fil métallique (12) enroulé concentriquement à l'axe longitudinal médian des sections de tuyau.

4. Dispositif selon la revendication 3, **caractérisé en ce que** le boîtier se compose pour l'essentiel de deux sections de tuyau cylindriques disposées de façon réciproquement concentrique (10, 14), qui en l'une de leurs extrémités sont respectivement pourvues d'un fond (16, 18), et qui, en l'autre extrémité, sont reliées l'une à l'autre en comblant l'espace intermédiaire et en le fermant de façon qu'il soit étanche aux liquides, la section de tuyau intérieure (10) étant ce faisant plus courte que la section de tuyau extérieure (14), de telle sorte que les fonds (16, 18) des sections de tuyau sont disposés de façon à être espacés l'un de l'autre et que l'espace creux entre les sections de tuyau forme un espace qui s'apparente à un pot.

5. Dispositif selon la revendication 4, **caractérisé en ce qu'**un autre fil métallique (20) est prévu dans l'espace intermédiaire, enroulé en spirale entre les fonds (16, 18) des sections de tuyau, son axe d'enroulement étant disposé transversalement à l'axe longitudinal médian des sections de tuyau (10, 14)

6. Dispositif selon la revendication 3, **caractérisé en ce que** le boîtier comporte deux sections de tuyau disposées réciproquement concentriquement, de longueur identique et de diamètre différent, qui, en l'une de leurs extrémités disposent d'un fond commun et qui, en leur autre extrémité sont reliées l'une à l'autre en comblant l'espace intermédiaire et en le fermant de façon étanche aux liquides, de telle sorte qu'un espace creux soit formé entre les sections de tuyau qui forme une chemise cylindrique, dans lequel est disposé le fil métallique (12) enroulé concentriquement à l'axe longitudinal médian des sections de tuyau.

7. Dispositif selon l'une des revendications 3 à 5, **caractérisé en ce qu'**il est disposé, au niveau de la paroi intérieure de la section de tuyau intérieure (10), un tuyau d'admission (26) débouchant de façon à être espacé du fond (16) du boîtier et à dépasser au-dessus de l'extrémité ouverte du boîtier, et **en ce qu'**un collet tronconique (30) pourvu d'un tuyau d'évacuation (32) orienté vers le bas et obliquement vers l'extérieur se raccorde au niveau de l'extrémité supérieure de la section de tuyau intérieure ou extérieure (10, 14).

8. Dispositif selon la revendication 3, **caractérisé en ce que** la section de tuyau intérieure (10') est plus longue que la section de tuyau extérieure (14') et **en ce qu'**elle est conçue de façon ouverte en ses deux extrémités, **en ce que** la section de tuyau extérieure (14') est disposée concentriquement à la section de tuyau intérieure (10') et **en ce qu'**elle est reliée avec la section de tuyau intérieure (10') au niveau de ses deux extrémités en comblant l'espace intermédiaire entre les sections de tuyau (10', 14') et en le fermant de façon étanche aux liquides, de telle sorte qu'un espace creux formant une chemise cylindrique est formé entre les sections de tuyau (10', 14'), dans lequel est disposé le fil métallique (12) enroulé concentriquement à l'axe longitudinal médian des sections de tuyau (10', 14').

9. Dispositif selon la revendication 8, **caractérisé en ce qu'**un tuyau souple peut être chaque fois raccordé aux extrémités libres respectives (36, 36') de la section de tuyau intérieure (10').

10. Dispositif selon l'une des revendications 1 à 9, **caractérisé en ce que** la longueur de la section de tuyau (10, 10') pouvant être traversée par la boisson est supérieure à son diamètre, de préférence équivaut à deux à dix fois son diamètre.

11. Dispositif pour influer sur le goût et l'arôme d'aliments ou de boissons, en particulier de produits de distillation alcoolisés, de vins et de jus de fruits, **caractérisé par** un boîtier conçu essentiellement sous forme d'une plaque en matériau conducteur (10") pouvant être alimenté coté extérieur avec l'aliment ou la boisson, à l'intérieur duquel est disposé un fil métallique (12) éventuellement enroulé autour d'un élément de support (38) et présentant des extrémités ouvertes.

12. Dispositif selon la revendication 11, **caractérisé en ce que** le boîtier (10") est fabriqué en acier spécial, en particulier en acier spécial austénitique.

13. Dispositif selon la revendication 11 ou 12, **caractérisé par** deux boîtiers (10") contenant respectivement un fil métallique (12) disposés de façon à être espacés l'un de l'autre avec leurs côtés plats disposés sur un plan réciproquement sensiblement parallèle.

14. Dispositif selon l'une des revendications 1 à 13, **caractérisé en ce que** le fil métallique (12, 20) est en cuivre, en argent ou en or, ou fabriqué dans un alliage de ces métaux.

15. Dispositif selon l'une des revendications 1 à 14, **caractérisé en ce que** le fil métallique (12, 20) présente une épaisseur de fil de 0,1 à 10 mm.

16. Dispositif selon l'une des revendications 1 à 15, **caractérisé en ce que** le fil métallique (12, 20) est conçu comme fil plat avec une section transversale essentiellement carrée, la section transversale étant comprise entre 0,1 mm x 1 mm et 10 mm x 100 mm.

17. Dispositif selon l'une des revendications 1 à 16, **caractérisé par** une pluralité, en particulier deux ou trois enroulements de fils disposés concentriquement les uns par rapport aux autres.

18. Dispositif selon l'une des revendications 1 à 17, **caractérisé en ce que** les enroulements de fils (12, 20') sont réciproquement isolés.

19. Dispositif selon l'une des revendications 3 à 18, **caractérisé en ce que** le boîtier est rempli de roche pulvérisée, de préférence de la poudre de quartz.

20. Procédé pour influer sur le goût et l'arôme d'aliments ou de boissons, en particulier de produits de distillation alcoolisés et de vins, utilisant un dispositif selon l'une des revendications 1 à 10, **caractérisé en ce que** l'aliment ou la boisson est conduit à travers une section de tuyau en matériau conducteur (10, 10') entourée au moins pour partie par un fil métallique (12) comportant des extrémités ouvertes et enroulé en spirale.

21. Procédé pour influer sur le goût et l'arôme d'aliments ou de boissons, en particulier de produits de distillation alcoolisés et de vins, utilisant un dispositif selon l'une des revendications 11 à 19, **caractérisé en ce qu'**un côté plat d'un boîtier en matériau conducteur et pour l'essentiel en forme de plaque (10"), à l'intérieur duquel est disposé un fil métallique avec des extrémités ouvertes (12) éventuellement enroulé autour d'un élément de support (38), est alimenté côté extérieur en aliment ou en boisson.

22. Procédé selon la revendication 21, **caractérisé en ce que** l'aliment ou la boisson est transporté sur un élément de transport, en particulier une bande transporteuse, au-dessus du côté plat du boîtier.

23. Procédé selon l'une des revendications 20 à 22, **caractérisé en ce que** le temps de séjour de l'aliment ou de la boisson dans la zone circonscrite par le fil métallique enroulé (12) est d'au moins 100 millisecondes, de préférence de 2 à 30 secondes.
